# EUROPÄISCHE PATENTSCHRIFT

(11) **EP 0 903 322 B1**
(45) Veröffentlichungstag und Bekanntmachung des Hinweises auf die Patenterteilung: **19.12.2001**
(21) Anmeldenummer: 98114257.3
(22) Anmeldetag: 06.08.1998
(51) Int. Cl.: C01B 17/88

(54) **Verfahren zur Aufkonzentrierung von Dünnsäure durch Ausnutzung von Prozesswärme in einer Zwangsumlaufverdampferanlage**
Process for the concentration of dilute sulfuric acid in a vacuum evaporating system making use of process heat
Procédé de concentration d'acide dilué par un évaporateur à vide et à l'utilisation de chaleur industrielle

(30) Priorität: 20.09.1997 DE 19741511
(43) Veröffentlichungstag der Anmeldung: 24.03.1999
(73) Patentinhaber: Sachtleben Chemie GmbH, 47198 Duisburg (DE)
(72) Erfinder: Engels, Klaus, 47647 Kerken (DE); Fach, Roland, 46514 Schermbeck (DE); Ronkholz, Horst, 47890 Krefeld (DE); Wagner, Hartmut, Dr., 47441 Moers (DE)
(74) Vertreter: Uppena, Franz, Dr.

(56) Entgegenhaltungen:
- EP-A- 0 133 505
- EP-A- 0 262 510
- EP-A- 0 425 000
- EP-A- 0 429 933
- DE-C- 4 029 737

## Beschreibung

Die Erfindung bezieht sich auf ein Verfahren zum Konzentrieren von Schwefelsäure, Wasser und gelöste Salze enthaltender Dünnsäure der TiO₂-Herstellung, die im Kreislauf über eine Zwangsumlaufverdampfeanlage, besteht aus einem mit Prozeßbrüden beheizbaren Rohrbündelwärme-austauscher und einem Verdampfungsbehälter, geleitet wird.

Verfahren zur Aufkonzentrierung von Dünnsäure durch Ausnutzung von Prozeßwärme in einer Zwangsumlaufverdampferanlage sind bekannt. In der DE-A-3327769 ist ein Verfahren zur Aufbereitung von Dünnsäure beschrieben, bei dem in einem ersten Schritt vorgesehen ist, die Dünnsäure mit einer Schwefelsäurekonzentration von 23 bis 28 Gew.% durch Ausnutzung von Prozeßwärmer auf einen H₂SO₄-Gehalt von maximal 32 Gew.% vorzukonzentrieren. Die vorkonzentrierte Dünnsäure wird anschließend in vorteilhafterweise einer dreistufigen Vakuumzwangsumlaufverdampferanlage zugeführt.

In der DE-A-4029737 wird ein Verfahren zur Aufkonzentrierung von Dünnsäure in einer dreistufigen VakuumZwangsumlauferverdampfer-anlage beschrieben, bei dem in vorteilhafter Ausgestaltung ebenfalls vorgesehen ist, die Dünnsäure vor Eintritt in die dreistufige Vakuum-Zwangsumlaufverdampferanlage durch Ausnutzung von Prozeßwärme auf eine Konzentration von 25 bis 32 Gew.% vorzukonzentrieren. Bei diesem Verfahren ist es nachteilig, daß bei der Vorkonzentrierung lediglich eine Endkonzentration von 32 Gew.% erreicht wird und eine weitere Aufkonzentrierung nur relativ aufwendig in einer dreistufigen Vakuum-Zwangsumlaufverdampferanlage realisiert werden kann, wobei zusätzlicher Heizdampf benötigt wird.

In der EP-A-0425000 ist ein Verfahren zum Konzentrieren von Schwefelsäure, Wasser und gelöste Salze enthaltender Dünnsäure vorgesehen, indem die Dünnsäure in einer ersten Stufe bei Temperaturen von 50 bis 70° C im Kreislauf über eine mit Prozeßbrüden beheizte Wärmeaustauscherzone und Ausdampfzone geleitet wird. Die dabei auf 25 bis 40 Gew.% konzentrierte Dünnsäure wird in einer zweiten Stufe bei Temperaturen von 130 bis 160°C im Kreislauf über eine mit Frischdampf beheizte Wärmeaustauscherzone und Ausdampfzone geleitet und die Dünnsäure mit einer Konzentration von 60 bis 80 Gew.% abgezogen.

Es ist die Aufgabe der vorliegenden Erfindung, daß eingangs beschriebene Verfahren so auszubilden, daß höhere Endkonzentrationen auf konstruktiv relativ einfache Weise und kostengünstig erreichbar sind.

Die der Erfindung zugrundeliegende Aufgabe wird dadurch gelöst, daß der Rohrbündelwärmeaustauscher mit aus der Dampfstrahlmühle der TiO₂ -Herstellung abgeführten und über ein Staubfilter geleiteten Prozeßbrüden beaufschlagt wird.

Bei der Herstellung von TiO₂ hat es sich bewährt, eine Aufmahlung auf die gewünschte Partikelgröße in einer Dampfstrahlmühle vorzunehmen. Der aus der Dampfstrahlmühle abgeführte Dampf, der TiO₂-Partikel enthält, hat in der Regel eine Temperatur von 140°C und kann nach Abtrennung der TiO₂-Partikel als Heizmedium direkt dem Rohrbündel-wärmeaustauscher einer einstufigen Zwangsumlaufver-dampferanlage zugeführt werden, wobei eine überraschender Weise Aufkonzentrierung von Dünnsäure auf eine Konzentration von 42 bis 52 Gew.% erfolgen und auf die Zugabe von zusätzlichem Heizdampf in der einstufigen Zwangsumlaufverdampferanlage verzichtet werden kann. Für die Abtrennung der TiO₂-Partikel können bekannte Staubfilter eingesetzt werden. Durch die Entfernung der TiO₂-Partikel aus dem Prozeßbrüden vor Eintritt in den Rohrbündelwärmeaustauscher wird erreicht, daß nachteilige Anbackungen von eventuell mitgerissenem TiO₂ im Wärmeaustauscher der einstufigen Zwangsumalufverdampferanlage auftreten.

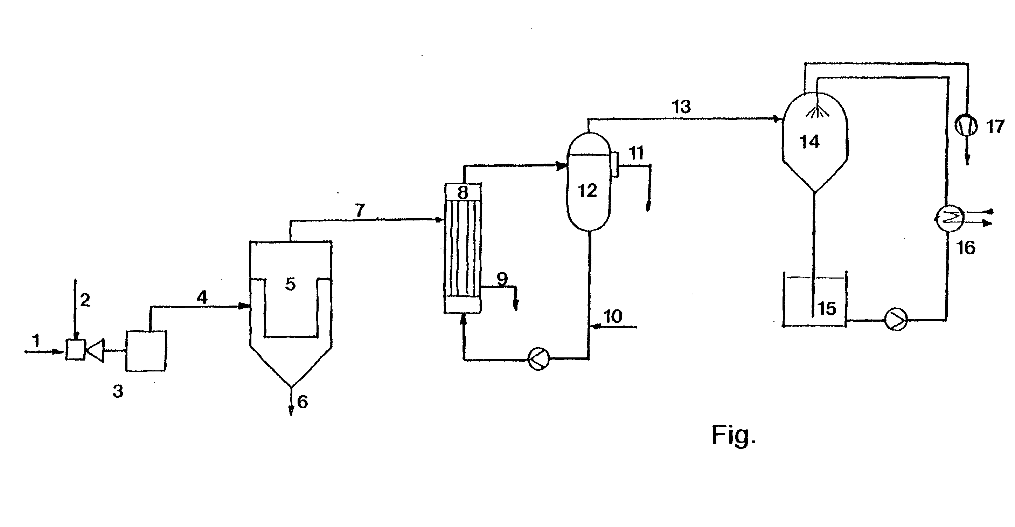

Die Erfindung wird nachfolgend anhand der Zeichnung (Figur) näher und beispielhaft erläutert.

Dampf (1) und TiO₂ (2) werden einer Dampfstrahlmühle (3) zugeführt, in welcher eine Aufmahlung des TiO₂ auf eine Partikelgröße von 0,4 µm erfolgt. Die aufgemahlenen TiO₂-Partikeln werden anschließend mit dem Dampf aus der Dampfstrahlmühle (3) abgeführt. Diese Mischung gelangt über die Leitung (4) in das Schlauchfilter (5), um das TiO₂ im Dampf abzuscheiden. Das TiO₂ wird über die Austragsleitung (6) aus dem Schlauchfilter (5) abgeführt. Der von TiO₂ befreite Dampf gelangt über die Zufuhrleitung (7) in den Rohrbündelwärmetauscher (8) der einstufigen Zwangsumlaufverdampferanlage. Im Rohrbündelwärmetauscher (8) wird der Dampf kondensiert und das Kondensat über die Abfuhrleitung (9) abgeführt. Der über die Zufuhrleitung (7) in die einstufige Zwangsumlaufverdampferanlage eingeführte Dampf dient als Heizmedium zur Aufkonzentrierung von Dünnsäure. Der Verdampferbehälter (12) ist über eine Umwälzleitung mit Umwälzpumpe mit dem Rohrbündelwärmetauscher (8) verbunden. Die aufzukonzentrierende Dünnsäure gelangt über die Einspeisung (10) in die einstufige Zwangsumlaufverdampferanlage, in welcher sie auf eine Konzentration von >32 bis 52 Gew.-% aufkonzentriert wird. Die aufkonzentrierte Dünnsäure verläßt die einstufige Zwangsumlaufverdampferanlage über die Austragsleitung (11). Der Brüdendampf, der in der einstufigen Zwangsumlaufverdampferanlage anfällt, wird dem Verdampferbehälter (12) entnommen und über die Brüdenleitung (13) einem Einspritzkühler (14) zugeführt, in welchem die Brüden mit Kühlwasser in Kontakt gebracht und kondensiert werden. Das Kühlwasser wird über den Kühlwasservorlagebehälter (15), einer Umlaufpumpe und einem Zwischenkühler (16) im Kreislauf geführt und somit dem Einspritzkühler (14) erneut zugeführt. An den Einspritzkühler (14) ist eine Leitung mit einer Vakuumpumpe (17) angeschlossen, die gewährleistet, daß sowohl im Einspritzkühler (14) als auch in der einstufigen Zwangsumlaufverdampferanlage Druckbedingungen unter Vakuum herrschen.

## Patentansprüche

1. Verfahren zum Konzentrieren von Schwefelsäure, Wasser und gelöste Salze enthaltender Dünnsäure der TiO₂-Herstellung, die im Kreislauf über eine Zwangsumlaufverdampferanlage, bestehend aus einem mit Prozeßbrüden beheizbaren Rohrbündelwärmeaustauscher und einem Verdampfungsbehälter, geleitet wird, **dadurch gekennzeichnet, daß** der Rohrbündelwärmeaustauscher mit aus der Dampfstrahlmühle der TiO₂ -Herstellung abgeführten über einen Staubfilter geleiteten Brüden beheizt und eine Dünnsäure mit einem Schwefelsäuregehalt von 42 bis 52 Gew.% abgezogen wird.

## Claims

1. Method for concentrating dilute acid from TiO₂-production that contains sulphuric acid, water and dissolved salts and which is circulated by way of a forced circulation evaporator system, consisting of a tube bundle heat exchanger that can be heated by process vapours and of an evaporation vessel, **characterized in that** the tube bundle heat exchanger is heated by vapours that are removed from the steam jet mill of the TiO₂-production and are conducted by way of a dust filter, a dilute acid having a sulphuric-acid content of 42 to 52 % by weight being drawn off.

## Revendications

1. Procédé pour concentrer un acide dilué provenant de la fabrication de TiO₂ et contenant de l'acide sulfurique, de l'eau et des sels. dissous, que l'on fait circuler en circuit fermé dans un évaporateur à circulation forcée constitué d'un échangeur de chaleur à faisceau tubulaire chauffé par des vapeurs chaudes de procédé et d'un récipient d'évaporation, lequel procédé est **caractérisé par le fait que** l'échangeur de chaleur à faisceau tubulaire est chauffé par des vapeurs chaudes provenant du broyeur à jet de vapeur de la fabrication de-TiO₂ et ayant traversé un filtre à poussière, et **par le fait que** l'on soutire un acide dilué ayant une teneur en acide sulfurique comprise entre 42 et 52 % en poids.
